# EUROPÄISCHE PATENTSCHRIFT

(11) **EP 2 477 844 B1**
(45) Veröffentlichungstag und Bekanntmachung des Hinweises auf die Patenterteilung: **06.07.2016**
(21) Anmeldenummer: 10752850.7
(22) Anmeldetag: 17.09.2010
(51) Int. Cl.: B60N 3/10

(54) **EINTEILIGE KUNSTSTOFF-KLEMMEINRICHTUNG FÜR EINEN HALTER FÜR GETRÄNKEBEHÄLTER**
ONE-PIECE PLASTIC-CLAMP DEVICE FOR A HOLDER OF BEVERAGE CONTAINERS
DISPOSITIF DE SERRAGE PLASTIQUE D'UNE SEULE PIÈCE POUR LE SUPPORT POUR UN RÉCIPIENT DE BOISSON

(30) Priorität: 18.09.2009 DE 102009029579; 10.05.2010 DE 102010028805
(43) Veröffentlichungstag der Anmeldung: 25.07.2012
(73) Patentinhaber: Ford Global Technologies, LLC, Dearborn MI 48126 (US)
(72) Erfinder: VOIGT, Torsten, 50670 Köln (DE); SCHORN, Klaus, 50829 Köln (DE)
(74) Vertreter: Dörfler, Thomas
(86) Internationale Anmeldenummer: PCT/EP2010/063717
(87) Internationale Veröffentlichungsnummer: WO 2011/033074

(56) Entgegenhaltungen:
- DE-A1- 19 746 762
- DE-A1-102004 008 012
- DE-B4- 19 529 877
- US-A- 4 623 112

## Beschreibung

Die Erfindung bezieht sich auf eine Klemmeinrichtung eines Becherhalters für Getränkebehälter, insbesondere zur Verwendung in einem Kraftfahrzeug, nach dem Oberbegriff des Anspruchs 1.

Grundsätzlich erfordern verschiedene auf dem Markt befindliche Getränkebehältergrößen stark anpassungsfähige Mittel, um die verschiedenen Größen sicher zu platzieren. Dabei treten Durchmesser im Bodenbereich von etwa 50 mm bis zu mehr als 80 mm auf sowie variierende Behälterwinkel. Damit ist eine sehr flexible Klemmeinrichtung für die Getränkebehälter erforderlich. Erschwerend kommt hinzu, daß der Bereich, in dem die Becherhalter eingesetzt werden, üblicherweise sehr wenig Platz für die Mechanik der Klemmeinrichtung zur Verfügung steht.

Die EP 1 366 952 B1 bezieht sich auf einen Becherhalter, mit einer einen Boden aufweisenden Behälteraufnahme für einen Getränkebehälter und einer Klemmeinrichtung mit radial wegdrückbaren und in die Behälteraufnahme hinein ragenden Haltebacken, die an Federelementen angeordnet sind, wobei die Federelemente einstückig an einem Trägerteil angeordnet sind, das am Boden der Behälteraufnahme befestigt ist. Es ist dabei vorgesehen, dass die Behälteraufnahme an ihrem Boden einen hinterschnittenen Zapfen aufweist, an dem das ein Schlüsselloch aufweisende Trägerteil befestigt ist. Es ist dabei gemäß einer Ausführungsform vorgesehen, dass die Haltebacken einstückig an den Federelementen angeformt sind. Weiterhin kann vorgesehen sein, dass an den Haltebacken Kunststoffaufsätze angebracht sind.

Eine derart ausgebildete Anordnung soll einen Becherhalter für einen Getränkebehälter schaffen, der mit möglichst geringem Aufwand insbesondere für die Klemmvorrichtung herstellbar ist. Für eine einfache Befestigung ist dabei wie beschrieben vorgesehen, dass die Behälteraufnahme an ihrem Boden einen hinterschnittenen Zapfen aufweist, an dem das Trägerteil mittels eines Schlüsselloches befestigt wird. Bei der Montage wird das Trägerteil derart über die Behälteraufnahme gestülpt, dass der Zapfen durch das Schlüsselloch geführt wird. Durch eine Verdrehung des Trägerteiles gegenüber der Behälteraufnahme greift der Zapfen hinter das Trägerteil. Gleichzeitig greifen die Haltebacken in die Öffnungen der Behälteraufnahme, wodurch ein Zurückdrehen verhindert wird.

Die DE 195 29 877 B4 bezieht sich auf einen Becherhalter für Getränkedosen, Tassen, Flaschen oder dergleichen Behälter in Kraftfahrzeugen, wobei der Becherhalter an Einbauteilen des Kraftfahrzeugs befestigt oder mit diesen einteilig ausgebildet ist und aus einem becherartigen Formteil besteht, das einen in Einbaulage von oben zugänglichen Einbauschubraum für einen der Behälter aufweist, wobei das becherartige Formteil in der lichten Innenweite reduzierte Bereiche aufweist, wobei sich an die Mündung in Richtung auf den Boden zunächst eine Zone größter lichter Weite anschließt, an diese mindestens eine Zone geringerer lichter Weite anschließt. Dabei ist vorgesehen, dass das Formteil von einer Spanneinrichtung umgeben ist, die aus einem unter dem Boden des Formteiles angeordneten oder den Boden des Formteiles bildenden Mittelteil und von diesem abragenden, sich entlang der Formteilwandung erstreckenden, in achsparallele Schlitze der Wandung des Formteiles eindrückbaren federnden Armen sowie einem die Arme in die Schlitze drängenden Stellglied besteht, mittels dessen die Arme aus einer ersten Lage, in der sie die Innenkontur des Formteiles im Schlitzbereich nicht überragen, in eine zweite Lage, in der sie nach radial innen über die Innenkontur des Formteiles vorragen, verstellbar sind, und dass die Arme an ihrer die Schlitze nach innen überragenden Flanke in der Weise abgestuft sind, wie dies der Abstufung der Bereiche unterschiedlicher lichter Innenweite des Formteiles entspricht, oder dass unter Vermeidung des Stellgliedes die federnden Arme aus einer Lage, in der sie über die Innenkontur des Formteiles nach radial innen vorragen, durch einen in das Formteil eingesetzten Behälter in eine Lage nach radial außen entgegen der Federkraft wegbewegbar sind, so dass sie sich am Umfang des eingesetzten Behälters abstützen, wobei die Arme an ihrer zur Anlage am Behälter dienenden Flanke in der Weise abgestuft sind, wie dies der Abstufung der Bereiche unterschiedlicher Innenweite des Formteiles entspricht, so dass auf den Randkanten der Stufen der Behälterbodenrand aufliegt.

Dabei ist gemäß einer Ausführungsform vorgesehen, dass die Arme am freien Ende von Haltefingern angeformt sind, die sich vom Mittelteil bis zur Mündungsebene des Formteiles erstrecken oder kurz vor dieser Ebene enden, wobei die Arme von den freien Enden der Haltefinger parallel zu diesen in Richtung auf das Mittelteil gerichtet sind und zwischen Fingern und Formteil oder Formteilinnenraum angeordnet sind.

Mit einer derartigen Ausbildung soll ein solcher Becherhalter geschaffen werden, der das standsichere und geräuschfreie Einstellen von Behältern unterschiedlicher Durchmesser ermöglicht. Dabei kann das becherartige Formteil beispielsweise mündungsnah einen Bereich größter lichter Weite aufweisen, in den eine relativ große Tasse einsetzbar ist, wobei sich an diesen Bereich größter lichter Weite ein Bereich geringerer lichter Weite anschließt, in den Dosen oder Flaschen einstellbar sind, die kleineren Durchmesser als eine in den ersten Bereich eingesetzte Tasse haben, aber größeren Durchmesser als weitere Behälter, die alternativ in den Becherhalter eingestellt werden können. An diese Zone schließt sich schließlich eine weitere Zone noch geringerer lichter Weite an, in welche im Durchmesser entsprechend gering bemessene Behälter oder dergleichen eingestellt werden können. Es wird somit in Abhängigkeit vom Behälterdurchmesser eine entsprechende Einstellmöglichkeit im Becherhalter gebildet, wodurch schon eine gewisse Verbesserung der Standsicherheit und Geräuschfreiheit erreicht sein soll. Um die Standsicherheit und Geräuschfreiheit noch weiter zu verbessern, sei das Formteil von der Spanneinrichtung umgeben. Dabei sei es mittels des Stellgliedes möglich, die federnden Arme in die Schlitze der Wandung des Becherhalters einzudrängen, so dass diese innenseitig des Becherhalters über die Wandung des Becherhalters vorragen und die eingestellten Gegenstände sicher erfassen könnten. Hierdurch werde eine sehr hohe Standfestigkeit und ein hohes Maß an Geräuschfreiheit erreicht, wobei durch die Abstufung der Arme entsprechend der Abstufungen des Innendurchmessers des Becherhalters die passenden Aufnahmeräume für im Durchmesser unterschiedliche Behälter geschaffen seien.

Die DE 20 2004 000 618 U1 bezieht sich auf eine Vorrichtung zur Aufnahme von mit Flüssigkeiten befüllbaren Aufnahmegefäßen in einem Fahrzeug, wobei die Vorrichtung einen einseitig offenen Behälter umfasst, welcher aus einem ersten Kunststoffmaterial besteht, wobei der Behälter einen Boden und einen Mantel umfasst, wobei der Mantel Elemente aufweist, welche in den Innenraum des Behälters hineinragen können, wobei die Elemente aus einem zweiten Kunststoffmaterial bestehen, welches elastische Eigenschaften aufweist. Dabei ist vorgesehen, dass auf jedes in den Innenraum des Behälters hinein ragende Element ein Federelement aus Kunststoff wirkt, welches eine Druckkraft auf das Element ausübt. In bevorzugter Ausgestaltung ist dabei vorgesehen, dass jedes Federelement einen Federarm und einen Haltearm umfasst, wobei vorzugsweise die Haltearme mehrerer Federelemente eine Einheit ausbilden.

Mit einer derartigen Ausbildung soll ein solcher Becherhalter für Getränkebehälter geschaffen werden, der einerseits Dichtigkeit gegen austretende Flüssigkeiten aufweist und andererseits für verschiedene Behältergrößen einstellbar ist. Es bestehen dabei die hinein ragenden Elemente und der Mantel zwar aus verschiedenen Materialen, bilden aber ein einziges Bauteil. Die Elemente und der Mantel sind in einem einzigen Verfahrensschritt in Zwei- Komponenten Spritzgießverfahren herstellbar.

Dabei wirkt das Federelement über eine Noppe auf die Außenseite des Elementes, das bedeutet, dass die Oberfläche des Elementes gegenüber der im wesentlichen zylindrischen oder konischen Wand einen Buckel nach innen aufweist. Dieser Buckel erreicht seine maximale Größe, wenn kein Getränkebehälter im Becherhalter vorhanden ist. Je nach Durchmesser des Getränkebehälters wird das Federelement über den Buckel durch den Getränkebehälter nach außen gedrückt, so dass der Getränkebehälter eingeschoben werden kann. Neben der Haltefunktion übt das Federelement eine Stabilisierungsfunktion aus, welche zur Folge hat, dass der Getränkebehälter nur durch Überwindung eines Widerstandes wieder aus seiner Becherhalterung gelöst werden kann. Somit seien auch Getränkebehälter, deren Höhe die Höhe des Becherhalters übersteigen, gegen Kippen gesichert. Mittels der Elemente aus elastischem Kunststoffmaterial und der auf sie wirkenden Federelemente könnten somit Getränkebehälter unterschiedlichen Durchmessers sicher gehalten werden. Ein derartiges Federelement bestehe vorteilhafterweise aus Kunststoff. Federelemente aus Metall oder aus Gummi bzw. Weichkomponenteneinsätzen mit Metallfedern hätten bei Becherhaltern für Getränkebehälter aus dem Stand der Technik wegen der Kombination unterschiedlicher Materialien und der Fugen, welche durch den Zusammenbau mehr oder weniger aufwendiger Federelemente mit separaten Halteelemente bestehen blieben, Klappergeräusche zur Folge. Derartige Klappergeräusche träten auch bei wesentlich teureren beweglichen Federelementen auf, weil eine Vielzahl von Elementen im Einsatz seien, welche gegeneinander verschieblich gelagert sein müssten, um die Funktion zu erfüllen, einen Becherhalter für Getränkebehälter variablen Volumens vorzusehen.

Nachteilig ist bei den hier betrachteten Anordnungen insbesondere, dass die gezeigten Federmechanismen auf einem einfachen Biegebalken beruhen, und nur eine Rotation um den Einspannpunkt erlauben. Dadurch ist eine runde Ausführung der Haltebacken im unteren Bereich erforderlich, um einen sauberen Kontakt zu gewährleisten. Die in dem DE 20 2004 000 618 U1 gezeigte Anordnung macht außerdem für Kunststoff eine sehr lange Ausführung des einfachen Biegebalkens erforderlich, und zwar länger als der Getränkebehälter selber, wobei es hier bei der Auslenkung des Kunststoffbalkens bei gebräuchlichen Rückstellkräften zu Weißbruch kommen kann.

Eine gattungsmäßige Klemmvorrichtung für einen Becherhalter ist aus der DE 19529877 B4 bekannt. Die Klemmeinrichtung weist radial wegdrückbare und durch einen Mantel in die Behälteraufnahme hinein ragende Haltebacken auf, die an Federelementen angeordnet sind. Ausgehend von seiner zugeordneten Haltebacke

erstreckt sich ein Federelement zunächst nach oben, ist dann um einen Radius gebogen und erstreckt sich anschließend weiter nach unten bis zum Boden des Becherhalters, wo alle Federelemente befestigt sind. Aufgrund dieser Form wirkt ein Federelemente als doppelt wirkende Biegebalken-Anordnung, da beim Aufbringen einer Klemmkraft auf die Haltebacke das im Federelement resultierende Biegemoment einen Nulldurchgang aufweist, d.h. das Federelement weist über seine gesamte Länge gesehen zwei entgegengesetzte Biegekrümmungen auf. Eine solche Klemmvorrichtung benötigt relativ viel Bauraum, da sich die Federelemente ausgehend von den Haltebacken nach oben und nach unten erstrecken.

Davon ausgehend liegt der vorliegenden Erfindung die Aufgabe zugrunde, die bekannten Klemmeinrichtungen unter Beibehaltung der bisherigen Vorteile in der Weise zu verbessern bzw. weiterzuentwickeln, dass die Nachteile der zuvor diskutierten Lösungen vermieden werden, wobei insbesondere die Klemmeinrichtung hinsichtlich ihrer Flexibilität und sicheren Becherhalterung der Getränkebehälter in verschiedenen Größen verbessert werden soll.

Diese Aufgabe wird erfindungsgemäß dadurch gelöst, dass das Federelement als doppelt wirkende Biegebalken-Anordnung nach Anspruch 1 ausgebildet ist. Doppelt wirkende Biegebalken-Anordnung bedeutet hier, dass ein Federelement eine doppelte Biegung über seine Länge erfährt, auch wenn das eine Ende des Federelements, wo es mit der Haltebacke verbunden ist, ein freies Ende ist. Über die Länge des Federelements ergeben sich damit zwei unterschiedliche Krümmungsrichtungen, das Federelement hat also mindestens einen Nulldurchgang der Krümmung, d.h. der Biegeradius ist dort unendlich. Bevorzugt liegt dieser Nulldurchgang der Krümmung etwa zwischen dem Trägerelement und der Haltebacke. Aufgrund dieser doppelten Biegebalken-Anordnung erfahren die Haltebacken eine nahezu lineare Klemmbewegung.

Neben der unten beschriebenen Ausführung mit den zwei oder mehr Biegfedern lässt sich die doppelte Biegebalken-Anordnung auch durch andere mechanische Maßnahmen erreichen, etwa indem die Drehung der Haltebacken bei der Klemmbewegung durch eine mechanische Zwangsführung verhindert wird, oder durch eine Abstützung der Klemmbacke durch eine zweites Federelement in eine dem ersten Federelement entgegengesetzte Richtung, wobei sich das zweite Federelement auch am Mantel oder Boden abstützt.

Dabei weist die Klemmvorrichtung mindestens zwei im Wesentlichen parallel verlaufende Biegefedern auf. In Klemmrichtung der Haltebacken gesehen, sind die Biegefedern hintereinander angeordnet. Da die Biegefedern an ihren jeweiligen Enden drehfest mit dem Trägerelement und der Haltebacke verbunden sind, stellt das Federelement eine doppelt wirkende Biegebalken-Anordnung dar. Bei der Klemmbewegung einer Haltebacke erfährt diese durch die mechanische Kopplung über die beiden parallelen Biegefedern nur eine Linearverschiebung, jedoch keine oder nur eine geringe Rotation, letzteres falls die Biegefedern nicht ganze parallel angeordnet sind. Diese Linearverschiebung resultiert jedoch in einer doppelten Biegung der Biegefedern selbst.

Diese doppelte Biegebalken-Anordnung der Biegefedern besitzt eine hohe Klemmkraft und einen hohen Klemmweg bei kurzen Federlängen gegenüber den zuvor bekannten Lösungen. Dies resultiert aus der beschriebenen doppelten Krümmung des Federelements und damit der Biegefedern. Damit kann das Spannungsniveau in den Biegefedern niedrig gehalten werden trotz hoher wirkenden Klemmkräfte. Das niedrigere Spannungsniveau erlaubt wiederum geringere wirksame Dicken der Biegefedern, was wiederum das Spannungsniveau sinken lässt und gleichzeitig den Klemmweg deutlich erhöht. Bei der Verwendung von Kunststoff als Material für die Biegefedern des Federelements können diese damit relativ dünn ausgeführt sein und unterliegen damit nicht so schnell der mechanischen Überlastung, die sonst bei der Verwendung von Kunststoffen für die Biegefedern bei Überdehnung sehr schnell auftritt und durch ein Aufweißen, d.h. ein Weißwerden an den überlasteten Bereichen, des vorher farbigen Kunststoffes erkennbar ist.

Auf diese Weise wird erstmalig mit einfachen Mitteln die Möglichkeit geschaffen, eine deutliche Verbesserung der Flexibilität und sicheren Becherhalterung der Getränkebehälter in verschiedenen Größen zu erzielen. Es wird dabei im Vergleich zu bekannten Klemmeinrichtungen für einen Becherhalter allenfalls eine zweite Biegefeder als zusätzliches Teil pro Klemmeinrichtung benötigt.

In einer weiteren Ausführung besteht das Federelement aus einer Vielzahl überwiegend parallel angeordneter Biegefedern. Statt der zwei Biegefedern können auch drei oder ein ganzes Bündel Biegefedern als Federelement verwendet werden. Damit kann auf engen Raum eine recht hohe Klemmkraft bei hohem Klemmweg realisiert werden. Wichtig ist dabei, dass jede Biegefeder jeweils nur an ihren Enden mit dem Trägerelement und der Haltebacke drehfest verbunden sind. Die Biegefedern können zwar auch untereinander zwischen Trägerelement und Haltbacke Verbindungen aufweisen, diese sollten nach Möglichkeit jedoch sowenig wie möglich die Biegesteifigkeit des Federelementes selbst erhöhen, d. h., die Biegefedern sollten sich zwischen der Befestigung am Trägerelement und der Befestigung an der Haltebacke in Längsrichtung möglichst ungehindert gegeneinander verschieben können. Dies gilt natürlich auch bei der Verwendung von nur zwei Biegefedern.

Vorteilhaft ist eine Biegefeder überwiegend flach und lang geformt. Damit ergibt sich eine bevorzugte Richtung für die Klemmbewegung automatisch, da eine solche Biegefeder fast ausschließlich, jedenfalls ohne weitere Maßnahmen, um die flache Seite gebogen werden kann. Für die Klemmbacke ist keine weitere Führungsmaßnahme notwendig.

In einer bevorzugten Ausführung sind Federelement, Haltebacke und Trägerelement einstückig hergestellt sind. Damit eignet sich die Klemmeinrichtung zur Herstellung insbesondere aus Kunststoff im Spritzgußverfahren. Dabei können auch einzelne Teile, insbesondere die Biegefedern des Federelementes aus einem anderen Material, z. B. Federstahl hergestellt sein, die dann mit dem Material des Trägerelements bzw. der Haltebacke umspritzt werden. Oder die Haltebacke ist aus einem anderen Material und wird dann umspritzt.

Vorteilhaft sind Federelement, Haltebacke und Trägerelement aus einem Material hergestellt sind, insbesondere aus einem geeigneten Kunststoff. Dann die Klemmeinrichtung integriert mit allen Teilen in einem Arbeitsgang hergestellt werden, wieder insbesondere im Spritzgußverfahren. Da die Biegefedern des Federelements - wie oben besprochen - relativ dünn ausgeführt sein können, kann für die gesamte Klemmeinrichtung auch ein relativ steifer, nicht so elastischer Kunststoff verwendet werden. Durch die geringe Dicke der Biegefedern kann trotzdem ein für die gesamte Klemmvorrichtung vorteilhafter Kunststoff als Material verwendet werden.

Bevorzugt weist die Haltebacke zumindest teilweise eine rutschhemmende Beschichtung auf. Diese Beschichtung kann nachträglich aufgetragen sein, sie kann als Einlage mit den anderen Teilen der Klemmeinrichtung eingespritzt sein oder durch jedes geeignete Verfahren auf die Klemmbacke aufgebracht sein. Die Haltebacke kann aber auch selber aus einem rutschhemmenden Material bestehen. Die rutschhemmende Beschichtung oder das rutschhemmende Material kann dann so ausgewählt werden, dass die Haltebacke eine optimale Haltewirkung erzielt. Das Material der Biegefedern und/oder des Halteelementes kann dann nach anderen Anforderungen ausgewählt werden.

Bevorzugt findet die Klemmeinrichtung Verwendung in einem Becherhalter, insbesondere für Getränkebehälter, mit einer Behälteraufnahme, gebildet durch einen Boden und einen Mantel, wobei das Trägerelement der Klemmeinrichtung am Boden und/oder am Mantel angeordnet ist und die Haltebacke in die Behälteraufnahme hinein ragt.

Vorteilhaft ist das Trägerelement der Klemmeinrichtung am Boden und/oder am Mantel befestigt. Als Befestigungsverfahren eignen sich z. B. Klipsen, Kleben, Schweißen, Schrauben oder Nieten. Damit kann die Klemmeinrichtung separat aufgebaut und optimiert werden hinsichtlich Konstruktion und Material. Der Zusammenbau zum Becherhalten kann dann leicht über das Trägerelement erfolgen, indem dieses mit der Wand oder dem Boden verbunden wird.

In einer weiteren Ausführung ist das Trägerelement Teil des Bodens und/oder des Mantels und das Federelement ist am Trägerelement befestigt. In diesem Fall werden Federelement mit den Biegefedern und Haltebacken separat gefertigt und dann für die Vervollständigung des Becherhalters mit dem Boden bzw. dem Mantel verbunden, wo dafür geeignete Aufnahmen und Befestigungsmöglichkeiten vorgesehen sind. Bevorzugt befestigt wiederum wird das Federelement am Trägerelement durch Klipsen, Kleben, Schweißen, Schrauben oder Nieten.

Vorteilhaft sind Klemmeinrichtung, Boden und Mantel einstückig hergestellt sind. Damit kann der Becherhalter in einem Stück hergestellt werden, ohne nachträgliche Montage.

In einer weiteren vorteilhaften Ausführung sind Klemmeinrichtung, Boden und Mantel aus einem Material hergestellt sind. Diese erlaubt ein einfache Wiederverwertung bzw. Recyceln des Becherhalters entweder bei Ausschußproduktion, bei Beschädigung oder am Ende des Fahrzeuglebens.

Bei der bevorzugten Ausführungsform der vorliegenden Erfindung sind dabei die als doppelt wirkende Biegebalken- Anordnung ausgebildeten Federelemente der Klemmeinrichtung an dem Becherhalter für Getränkebehälter anklipsbar ausgebildet.

Die Erfindung ist in den Figuren der Zeichnung in einem Ausführungsbeispiel dargestellt. Es zeigen:
- Fig. 1: eine schematische, perspektivische Oberansicht der erfindungsgemäßen Klemmeinrichtung in einem Becherhalter für Getränkebehälter;
- Fig. 2: eine schematische, perspektivische Unteransicht der erfindungsgemäßen Klemmeinrichtung in dem Becherhalter für Getränkebehälter mit eingesetztem Getränkebehälter;
- Fig. 3: eine schematische, perspektivische Darstellung der erfindungsgemäßen Klemmeinrichtung allein;
- Fig. 4: eine schematische Seitenansicht eines in der erfindungsgemäßen Klemmeinrichtung in einem Becherhalter für Getränkebehälter befindlichen Getränkebehälters;
- Fig. 5: einen vergrößerten Ausschnitt einer Klemmeinrichtung aus Fig. 4; und
- Fig. 6: eine schematische Seitenansicht mehrerer in der erfindungsgemäßen Klemmeinrichtung in einem Becherhalter für Getränkebehälter befindlicher Getränkebehälter unterschiedlicher Größe.

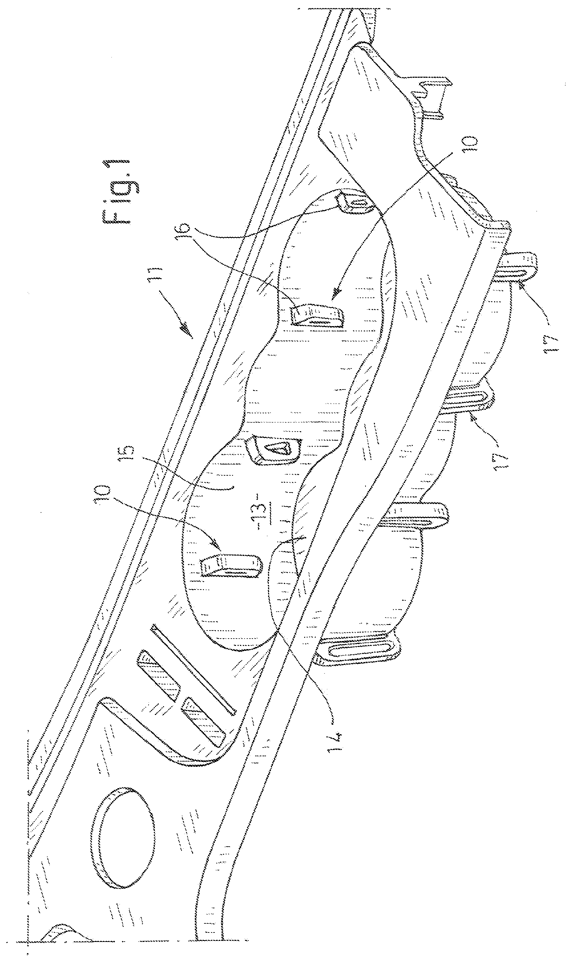

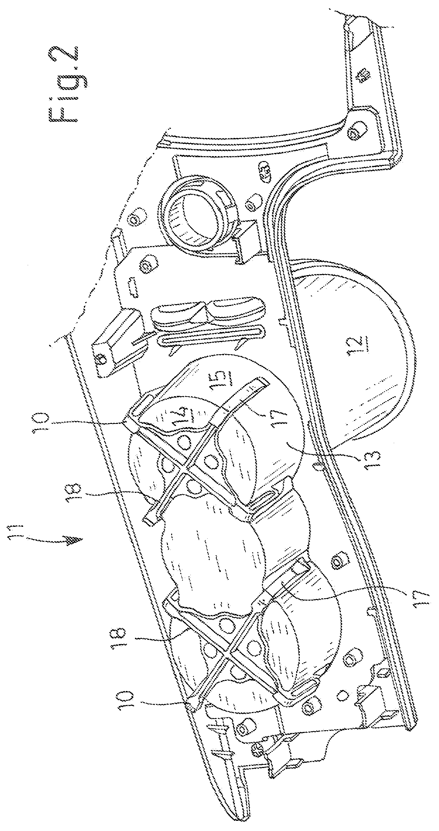

In Fig. 1 ist eine schematische, perspektivische Oberansicht, in Fig. 2 eine entsprechende Unteransicht der erfindungsgemäßen Klemmeinrichtung 10 in einem Becherhalter 11 für Getränkebehälter 12 dargestellt. Im Übrigen ist in den Fig. 1 und 2 jeweils ein Teil einer nicht näher bezeichneten Mittelkonsole dargestellt, in der sich der oder die Becherhalter 11 für Getränkebehälter 12 befinden. Die erfindungsgemäß ausgebildete Klemmeinrichtung ist generell mit 10 bezeichnet und ist vorgesehen für einen mit 11 bezeichneten Becherhalter für Getränkebehälter 12. Dabei weist der Becherhalter 11 eine einen Boden 14 und einen Mantel 15 aufweisende Behälteraufnahme 13 für einen Getränkebehälter 12 auf und die Klemmeinrichtung 10, die radial nach außen drückbare und durch den Mantel 15 in die Behälteraufnahme 13 hinein ragende Haltebacken 16 aufweist, die an Federelementen 17 angeordnet sind. Die Federelemente 17 sind einstückig an einem Trägerelement 18 angeordnet, welches wiederum am Boden 15 der Behälteraufnahme 13 angeordnet ist.

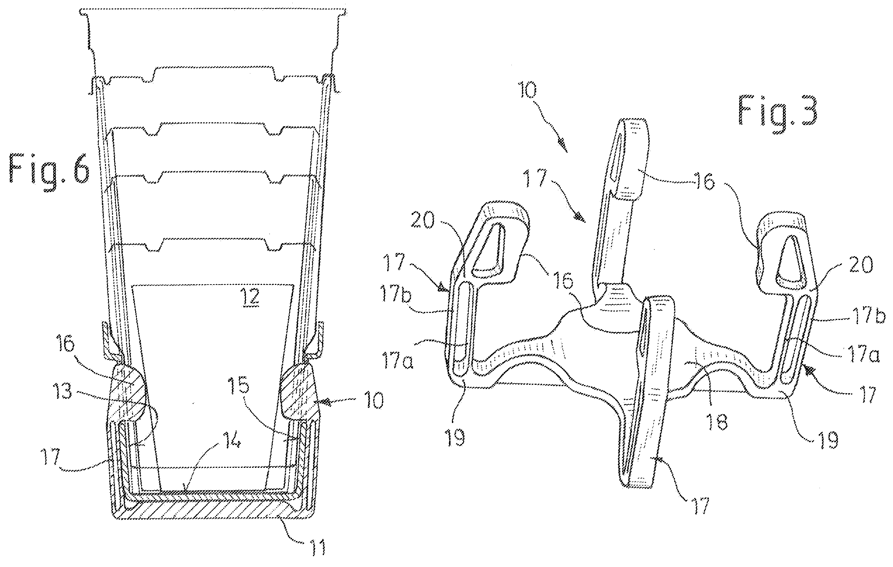

Es ist dabei erfindungsgemäß vorgesehen, dass die Federelemente 17 als doppelt wirkende Biegebalken- Anordnung ausgebildet sind, siehe dazu auch die Fig. 3 der Zeichnung, mit einer schematischen, perspektivischen Darstellung der erfindungsgemäßen Klemmeinrichtung 10 allein. Ein Federelement 17 besteht aus den beiden parallel angeordneten Biegefedern 17a, b, die in Klemmrichtung K gesehen hintereinander angeordnet sind. An ihren Enden sind die Biegefedern 17a, b über eine drehstarre Einspannung 19 mit dem Trägerelement 18 und über eine drehstarre Einspannung 20 mit der Haltebacke 16 verbunden.

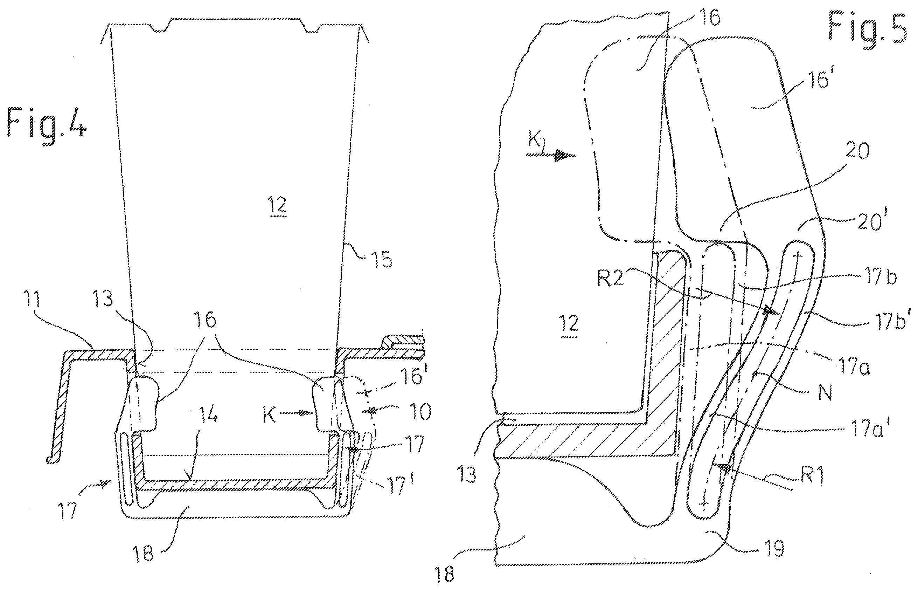

Die Funktion der Klemmeinrichtung 10 ist in Fig. 4 in einer schematischen Seitenansicht dargestellt, wobei die Klemmeinrichtung am Boden 14 des Becherhalters 11 befestigt ist. Im Becherhalter 11 befindet sich ein Getränkebehälter 12. Die Haltebacken 16 sind in der nicht geklemmten Stellung gezeigt, also unverformt. Die Haltebacke 16' befindet sich in Klemmposition, sie ist in Klemmrichtung K nach außen verschoben und baut so eine Haltekraft für den Getränkebehälter 12 auf.

Das Verhalten der Biegefedern 17a, 17b ist in Fig. 5 gezeigt, das einen vergrößerten Ausschnitt der Klemmeinrichtung 10 aus Fig. 4 darstellt. Beim Einstellen des Getränkebehälters 12 in die Behälteraufnahme 13 wird der Haltebacken 16 in Klemmrichtung K verschoben, bis der Haltebacken 16' sich in Halteposition befindet und den Becher 12 in der Behälteraufnahme 13 festklemmt. Bei der Klemmbewegung wird der Haltebacken 16 durch die beiden Biegfedern 17a, b nach außen geführt. Da die beiden Biegefedern in der Einspannung 19 am Trägerelement 18 und an der Einspannung 20 am Haltebacken 16 drehfest gelagert sind, weisen die Biegefedern 17a', 17b' in der Halteposition eine doppelte Biegung auf, gekennzeichnet durch die beiden entgegengesetzt orientierten Biegeradien R1 und R2. Die Klemmbewegung selbst verläuft annähernd linear, da die Einspannung 20' der Klemmbacke 16' gegenüber der Ausgangsposition der Einspannung 20 keine oder allenfalls eine geringe Rotation erfährt.

Die höchste Belastung in den Biegefedern 17a', 17b' tritt neben den Einspannungen 19, 20' auf. Zwischen den Einspannungen 19 und 20' weisen die beiden Biegefedern 17a', 17b' einen Nulldurchgang N der Krümmung auf, d.h. dort tritt keine oder allenfalls eine geringe Biegespannung auf. Die Biegeradien R1, R2 gehen an dieser Stelle gegen Unendlich.

Auf diese Weise wird erstmalig mit einfachen Mitteln die Möglichkeit geschaffen, eine deutliche Verbesserung der Flexibilität und sicheren Becherhalterung der Getränkebehälter 12 in verschiedenen Größen zu erzielen, siehe dazu auch die Fig. 6 der Zeichnung mit einer schematischen Seitenansicht mehrerer in der erfindungsgemäßen Klemmeinrichtung 10 in einem Becherhalter 11 für Getränkebehälter 12 befindlicher Getränkebehälter 12 unterschiedlicher Größe.

Wie bereits erwähnt, sind die dargestellten Ausführungsformen nur beispielsweise Verwirklichungen der Erfindung, diese ist nicht darauf beschränkt, es sind vielmehr noch mancherlei Abänderungen und Ausbildungen möglich. So kann die erfindungsgemäße einteilige Klemmeinrichtung 10 insbesondere eine von den dargestellten bzw. beschriebenen Ausführungsformen abweichende konstruktive Ausbildung aufweisen.

Der erfinderische Becherhalter kann auch zur Aufnahme von Gegenständen dienen, die eine ähnliche Form wie die vorgesehenen Getränkebehälter aufweisen, und die in einem Fahrzeug sicher, aber jederzeit zugreifbar untergebracht werden sollen, z. B. Taschenlampen.

### BEZUGSZEICHENLISTE

- 10: Klemmeinrichtung
- 11: Becherhalter (für 12)
- 12: Getränkebehälter
- 13: Behälteraufnahme (für 12)
- 14: Boden (von 13)
- 15: Mantel (von 13)
- 16: Haltebacken (von 10)
- 17: Federelement
- 17a, b: Biegefeder
- 18: Trägerelement (von 10 für 19)
- 19: Einspannung (von 18)
- 20: Einspannung (von 16)

## Patentansprüche

1. Klemmeinrichtung (10), mit einem Trägerelement (18), einer Haltebacke (16) und einem als Biegebalken ausgebildeten Federelement (17), wobei das Federelement (17) zwischen Trägerelement (18) und Haltebacke (16) angeordnet ist und mit diesen jeweils verbunden ist, das Federelement (17) als doppelt wirkende Biegebalken-Anordnung ausgebildet ist und das Federelement (17) wenigstens zwei im Wesentlichen parallel verlaufende Biegefedern (17a, 17b) aufweist, die in Klemmrichtung K gesehen hintereinander angeordnet sind,
**dadurch gekennzeichnet, dass**
die Biegefedern (17a, 17b) an ihren jeweiligen Enden drehfest mit dem Trägerelement (18) und der Haltebacke (16) verbunden sind.

2. Klemmeinrichtung nach Anspruch 1,
**dadurch gekennzeichnet, dass**
das Federelement aus einer Vielzahl überwiegend parallel angeordneter Biegefedern besteht.

3. Klemmeinrichtung nach Anspruch 1 oder 2,
**dadurch gekennzeichnet, dass**
eine Biegefeder (17a, 17b) überwiegend flach und lang geformt ist.

4. Klemmeinrichtung nach einem der vorherigen Ansprüche,
**dadurch gekennzeichnet, dass**
Federelement (17), Haltebacke (16) und Trägerelement (18) einstückig hergestellt sind.

5. Klemmeinrichtung nach einem der vorherigen Ansprüche,
**dadurch gekennzeichnet, dass**
Federelement (17), Haltebacke (16) und Trägerelement (18) aus einem Material hergestellt sind.

6. Klemmeinrichtung nach einem der vorherigen Ansprüche,
**dadurch gekennzeichnet, dass**
die Haltebacke (16) zumindest teilweise eine rutschhemmende Beschichtung aufweist.

7. Klemmeinrichtung nach einem der Ansprüche 1 bis 5,
**dadurch gekennzeichnet, dass**
die Haltebacke (16) aus einem rutschhemmenden Material besteht.

8. Klemmeinrichtung nach einem der vorherigen Ansprüche,
**dadurch gekennzeichnet, dass**
das Trägerelement (18) kreuzförmig aufgebaut ist und vier Federelemente (17) mit Haltebacken (16) aufweist.

9. Becherhalter, insbesondere für Getränkebehälter (12), mit einer Behälteraufnahme (13), gebildet durch einen Boden (14) und einen Mantel (15), und mit einer Klemmeinrichtung (10) nach einem der vorherigen Ansprüche, wobei das Trägerelement (18) der Klemmeinrichtung (10) am Boden (14) und/oder am Mantel (15) angeordnet ist und die Haltebacke (16) in die Behälteraufnahme (13) hinein ragt.

10. Becherhalter nach Anspruch 9,
**dadurch gekennzeichnet, dass**
das Trägerelement (18) der Klemmeinrichtung (10) am Boden (14) und/oder am Mantel (15) befestigt ist, bevorzugt durch Klipsen, Kleben, Schweißen, Schrauben oder Nieten.

11. Becherhalter nach Anspruch 9,
**dadurch gekennzeichnet, dass**
das Trägerelement Teil des Bodens (14) und/oder des Mantels (15) ist und das Federelement am Trägerelement befestigt ist, bevorzugt durch Klipsen, Kleben, Schweißen, Schrauben oder Nieten.

12. Becherhalter nach Anspruch 9,
**dadurch gekennzeichnet, dass**
Klemmeinrichtung (10), Boden (14) und Mantel (15) einstückig hergestellt sind.

13. Becherhalter nach einem der Ansprüche 9 bis 12,
**dadurch gekennzeichnet, dass**
Klemmeinrichtung (10), Boden (14) und Mantel (15) aus einem Material hergestellt sind.

## Claims

1. Clamping device (10) comprising a support element (18), a retaining jaw (16) and a spring element (17) configured as a flexible arm, wherein the spring element (17) is arranged between the support element (18) and the retaining jaw (16) and is connected thereto in each case, the spring element (17) is configured as a dual-acting flexible arm arrangement and the spring element (17) comprises at least two flexible springs (17a, 17b) extending substantially in parallel which are arranged one behind the other when viewed in the clamping direction K, **characterized in that** the flexible springs (17a, 17b) at their respective ends are connected fixedly in terms of rotation to the support element (18) and the retaining jaw (16).

2. Clamping device according to claim 1, **characterized in that** the spring element consists of a plurality of flexible springs arranged substantially in parallel.

3. Clamping device according to claim 1 or 2, **characterized in that** one flexible spring (17a, 17b) is of substantially planar and elongate shape.

4. Clamping device according to one of the preceding claims, **characterized in that** the spring element (17), the retaining jaw (16) and the support element (18) are produced in one piece.

5. Clamping device according to one of the preceding claims, **characterized in that** the spring element (17), the retaining jaw (16) and the support element (18) are produced from one material.

6. Clamping device according to one of the preceding claims, **characterized in that** the retaining jaw (16) at least partially comprises a non-slip coating.

7. Clamping device according to one of Claims 1 to 5, **characterized in that** the retaining jaw (16) consists of a non-slip material.

8. Clamping device according to one of the preceding claims, **characterized in that** the support element (18) is of cross-shaped design and comprises four spring elements (17) with retaining jaws (16).

9. Cup holder, in particular for beverage containers (12) comprising a container receptacle (13) formed by a base (14) and an outer casing (15) and comprising a clamping device (10) according to one of the preceding claims, wherein the support element (18) of the clamping device (10) is arranged on the base (14) and/or on the outer casing (15) and the retaining jaw (16) protrudes into the container receptacle (13).

10. Cup holder according to Claim 9, **characterized in that** the support element (18) of the clamping device (10) is fastened to the base (14) and/or to the outer casing (15), preferably by clipping, adhesive bonding, welding, screwing or riveting.

11. Cup holder according to Claim 9, **characterized in that** the support element is part of the base (14) and/or the outer casing (15) and the spring element is fastened to the support element, preferably by clipping, adhesive bonding, welding, screwing or riveting.

12. Cup holder according to Claim 9, **characterized in that** the clamping device (10), base (14) and outer casing (15) are produced in one piece.

13. Cup holder according to one of Claims 9 to 12, **characterized in that** the clamping device (10), base (14) and outer casing (15) are produced from one material.

## Revendications

1. Dispositif de serrage (10), avec un élément de support (18), une mâchoire de maintien (16) et un élément à ressort (17) réalisé sous la forme d'une barre de flexion, l'élément à ressort (17) étant disposé entre l'élément de support (18) et la mâchoire de maintien (16) et étant respectivement relié à eux, l'élément à ressort (17) étant réalisé sous la forme d'un agencement de barre de flexion à double action et l'élément à ressort (17) comportant au moins deux ressorts de flexion (17a, 17b) s'étendant pour l'essentiel parallèlement et disposés l'un derrière l'autre vus dans la direction de serrage K, **caractérisé en ce que** les ressorts de flexion (17a, 17b) sont reliés, au niveau de leurs extrémités solidaires en rotation respectives, à l'élément de support (18) et à la mâchoire de maintien (16).

2. Dispositif de serrage selon la revendication 1, **caractérisé en ce que** l'élément à ressort se compose d'une pluralité de ressorts de flexion majoritairement disposés parallèlement.

3. Dispositif de serrage selon la revendication 1 ou 2, **caractérisé en ce qu'**un ressort de flexion (17a, 17b) prend une forme majoritairement plate et en longueur.

4. Dispositif de serrage selon l'une quelconque des revendications précédentes, **caractérisé en ce que** l'élément à ressort (17), la mâchoire de maintien (16) et l'élément de support (18) sont fabriqués d'une seule pièce.

5. Dispositif de serrage selon l'une quelconque des revendications précédentes, **caractérisé en ce que** l'élément à ressort (17), la mâchoire de maintien (16) et l'élément de support (18) sont fabriqués à partir d'un matériau.

6. Dispositif de serrage selon l'une quelconque des revendications précédentes, **caractérisé en ce que** la mâchoire de maintien (16) comporte au moins en partie un revêtement antidérapant.

7. Dispositif de serrage selon l'une quelconque des revendications 1 à 5, **caractérisé en ce que** la mâchoire de maintien (16) se compose d'un matériau antidérapant.

8. Dispositif de serrage selon l'une quelconque des revendications précédentes, **caractérisé en ce que** l'élément de support (18) a une structure en forme de croix et comporte quatre éléments à ressort (17) avec des mâchoires de maintien (16).

9. Porte-gobelet, notamment pour récipient de boisson (12), avec un logement de récipient (13), formé à travers un fond (14) et une enveloppe (15), et avec un dispositif de serrage (10) selon l'une quelconque des revendications précédentes, l'élément de support (18) du dispositif de serrage (10) étant disposé au niveau du fond (14) et/ou de l'enveloppe (15) et la mâchoire de maintien (16) saillant dans le logement de récipient (13).

10. Porte-gobelet selon la revendication 9, **caractérisé en ce que** l'élément de support (18) du dispositif de serrage (10) est fixé au fond (14) et/ou à l'enveloppe (15), de façon préférée par clipsage, collage, soudure, vissage ou rivetage.

11. Porte-gobelet selon la revendication 9, **caractérisé en ce que** l'élément de support fait partie du fond (14) et/ou de l'enveloppe (15) et que l'élément à ressort est fixé à l'élément de support, de façon préférée par clipsage, collage, soudure, vissage ou rivetage.

12. Porte-gobelet selon la revendication 9, **caractérisé en ce que** le dispositif de serrage (10), le fond (14) et l'enveloppe (15) sont fabriqués d'une seule pièce.

13. Porte-gobelet selon l'une quelconque des revendications 9 à 12, **caractérisé en ce que** le dispositif de serrage (10), le fond (14) et l'enveloppe (15) sont fabriqués à partir d'un matériau.
